Europäisches Patentamt

(19) European Patent Office

Office européen des brevets

(11) Publication number: **0 153 897**
A2

(12) **EUROPEAN PATENT APPLICATION**

(21) Application number: **85630008.2**

(22) Date of filing: **08.02.85**

(51) Int. Cl.⁴: **G 06 F 3/023**

(30) Priority: **10.02.84 US 579228**

(43) Date of publication of application:
**04.09.85 Bulletin 85/36**

(84) Designated Contracting States:
**DE FR GB NL**

(71) Applicant: **UNITED TECHNOLOGIES CORPORATION**
**United Technologies Building 1, Financial Plaza**
**Hartford, CT 06101(US)**

(72) Inventor: **Ratchford, Michael**
**9 Copper Hill Terrace**
**East Granby Connecticut 06026(US)**

(74) Representative: **Waxweiler, Jean et al,**
**OFFICE DENNEMEYER S.à.r.l. 21-25 Allée Scheffer**
**P.O.Box 41**
**L-2010 Luxembourg(LU)**

㊹ **Variable data entry format.**

㊼ An operator interactive interface includes an interface signal processor connected through a communications link to an information system signal processor, a keyboard responsive to operator entered information, and a nonrastered display of character locations for displaying messages to the operator in response to arrangements of signal characters in the form of masks presented from the interface signal processor, each message including response queue signal characters which prompt operator action to permit an operator dialog with the system.

EP 0 153 897 A2

./...

FIG.3

Variable Data Entry Format

Field of Invention

This invention relates to information handling systems, and more particularly to operator interactive interfaces for uses with airborne information systems.

Background of the Invention

Airborne information systems, such as airborne integrated data systems (AIDS) which monitor and record selected subsystem parameters, require an operator interface with the system. This is a system requirement to allow data display in the aircraft cockpit for operator monitoring of selected parameters, and to allow some operator reprogramming of data acquisition routines.

Prior art interfaces may be classed in two broad categories: data entry/display interfaces which are microprocessor based and which provide an intelligent interactive interface between the operator and the information system signal processor, and nonprocessor based cockpit terminals which are connected to, and rely on the information system's signal processor for data display, with little or no data entry capabilities. The nonprocessor display terminals are not considered "user friendly" since their limited interactive capabilities require a great amount of operator discipline for even fundamental data entry routines. On the other hand, the prior art intelligent data entry/display units include an operator keyboard and cathode ray tube (CRT) display, with cursor. The cursor supplements the CRT displayed signal processor "prompts" to the operator; the cursor acting as a pointer for the operator indicating where data is to be entered in the displayed format. These systems, which are truely interactive and user friendly, provide a high level of operator interaction; but at a significant cost. The CRT display is itself costly; in terms of dollars, power consumption (which must be supplied and cooled in the aircraft) and weight. All of these are negative characteristics which make the use of the CRT displays in avionic information systems impractical.

Disclosure of the Invention

The object of the present invention is to provide an improved, operator interactive interface for avionic, signal processor based information systems.

According to the present invention, an operator interactive interface includes a communications link for exchanging information between the interface and the information system, a keyboard responsive to operator manipulation for providing keyboard signals indicative of operator entered data and operator entered command information, a nonrastered display having an arranged plurality of character locations for displaying, individually in response to signal characters presented to each location, various ones of a plurality of character indicia, which collectively communicate a message to the operator, the character locations being presented with the signal characters in an ordered sequence from an interface signal processor, connected through the communications link to the information system signal processor and responsive to the keyboard, the interface signal processor including a memory for storing the display signal characters in one or more memory display tables, each display table defining a display mask representing a unique operator intelligent message, each message including response queue signals at selected locations of each mask which prompt operator action as a prerequisite to the display of a succeeding mask display, whereby the displayed intelligent mask messages and queue prompts permit an operator dialog  with the system.

In further accord with the present invention, the response queue signals include option prompt queue signals and data entry queue signals for providing, alternately, operator keyboard selection of displayed message subject matter and a pointer for operator keyboard data entry at desired character locations in the displayed mask message format, the interface signal processor sampling the operator keyboard selections in response to the option prompt queue signals and the operator keyboard entered data in response to the data entry queue signals, in the ordered sequence, for providing in combination with the character signals of a given mask, the operator entered information to the information system signal processor, and for providing, in one or more mask messages, the information system response to the operator.

The present invention allows for a variable data entry format, both method and apparatus, for providing an intelligent, interactive interface between an operator and a signal processor based information system. The present interface apparatus includes a signal processor driven display having multiple lines of alpha-numeric character locations, each location displaying the intelligence included in a present one of a plurality of signal masks stored in the interface signal processor. The display provides a data entry queue signal, such as an "underbar" character indication to define the location of operator entered data into the syntax of the mask. The data entry queue signals, together with the other mask signal characters are displayed in an ordered sequence so that entered data is placed in the appropriate location of each mask's character sequence displayed to the operator, and communicated to the information in an intelligible format. The displayed mask provides immediate feedback as to the accuracy of his entries. It does this without the use of a CRT display, but rather a low power reflective display, such as liquid crystal.

These and other objects, features and advantages of the present invention will become more apparent in light of the following detailed description of a best mode embodiment thereof, as illustrated in the accompanying drawing(s).

Brief Description of the Drawing(s)

Fig. 1 is a system block diagram of an airborne integrated data system (AIDS) in which the present invention may be used;

Fig. 2 is a detailed system block diagram of one element of the invention as used in the system of Fig. 1;

Fig. 3 is a detailed system block diagram of the present invention as used in conjunction with the element of Fig. 2 in the system of Fig. 1;

Fig. 4 is an illustration of one embodiment of the present invention as used in the system of Fig. 1;

Figs. 5A-5C are illustrations of one feature of the embodiment of Fig. 4;

Fig. 6 is a tabulation of signal information as used in the description of the embodiment of Fig. 4;

Fig. 7 is another tabulation of signal information used in the description of the embodiment of Fig. 4;

Figs. 8A-8B are used in the description of the embodiments of Figs. 3, 4, as used in the system of Fig. 1; and

Figs. 9A-9B are flowchart diagrams used in description of the Fig. 1 element of the best mode embodiment of the present invention as used in the system of Fig. 1.

Best Mode for Carrying Out the Invention

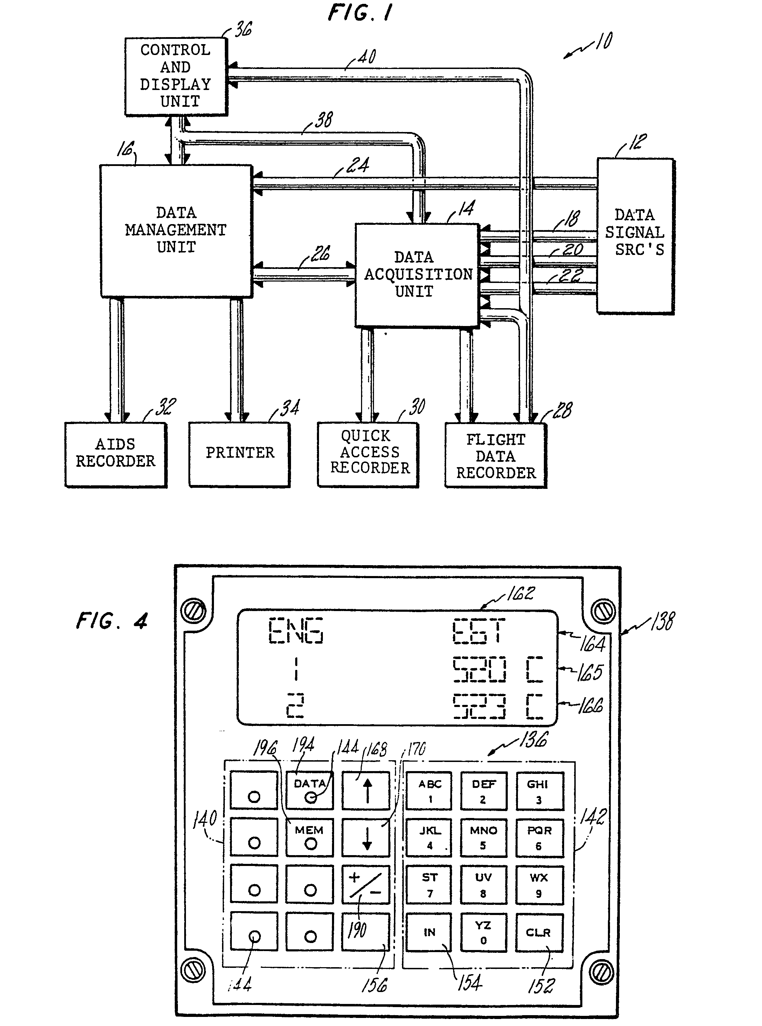

Fig. 1 is an illustration of an Airborne Integrated Data System (AIDS) 10 in which the variable data entry format of the present invention may be used. The AIDS monitors the performance of an aircraft by collecting subsystem operational data; both mandatory and nonmandatory flight data parameters. The data is received from aircraft data signal sources 12 by a Data Acquisition Unit (DAU) 14 and Data Management Unit (DMU) 16. The DAU is the interface for all mandatory sensed data; the DMU provides data management of all discretionary inputs, as well as monitoring the mandatory data received by the DAU. The DAU inputs include ARINC 429 DITS formatted signals on lines 18, analog signals on lines 20, and discrete signals on lines 22. The DMU receives ARINC 429 DITS formatted signals on lines 24, and receives data from the DAU through an ARINC 429 communications link 26.

The DAU multiplexes, conditions and formats the received signal information for output to a Flight Data Recorder (FDR) 28 (mandatory flight parameter recording) and to a Quick Access Recorder (QAR) 30 (selected subsystem data). All analog-to-digital (A/D) conversion of line 20 signals occurs in the DAU, which presents the digital equivalent signals, together with the line 22 discrete signals and line 18 ARINC 429 inputs to the FDR, QAR, and DMU. The DMU formats the ARINC 429 data from the DAU and the data sources for output to the AIDS recorder 32 and printer 34; both under control of the DMU.

A Control Display Unit (CDU) 36 provides for operator communication with the AIDS through the DMU and DAU via an ARINC 429 communications link 38, in a File Transfer Protocol. In the AIDS application the CDU also monitors the FDR output on line 40. The CDU, DMU, and DAU are each microprocessor based devices. All DMU, DAU, and FDR output data may be displayed by the CDU, and a CDU keyboard allows operator programming of the DMU. In the present invention, the CDU provides this interactive communication between the operator and the system with a variable data entry/display format which displays all operator programming and data entries as well as displaying all DMU/DAU received data for monitoring AIDS performance.

Although described with respect to an AIDS embodiment the present invention may be used in any type of operator interactive information system. In the best mode embodiment of the invention, the AIDS functions not related or necessary to an understanding of the invention are not disclosed to avoid unnecessary complexity in the description. Only those functions necessary to a full teaching of the invention are described. Similarly, in the AIDS application the CDU principal communications interface is with the DMU; the DAU communications being limited to CDU display of mandatory recorded data. As such, only the CDU/DMU interface will be described in detail.

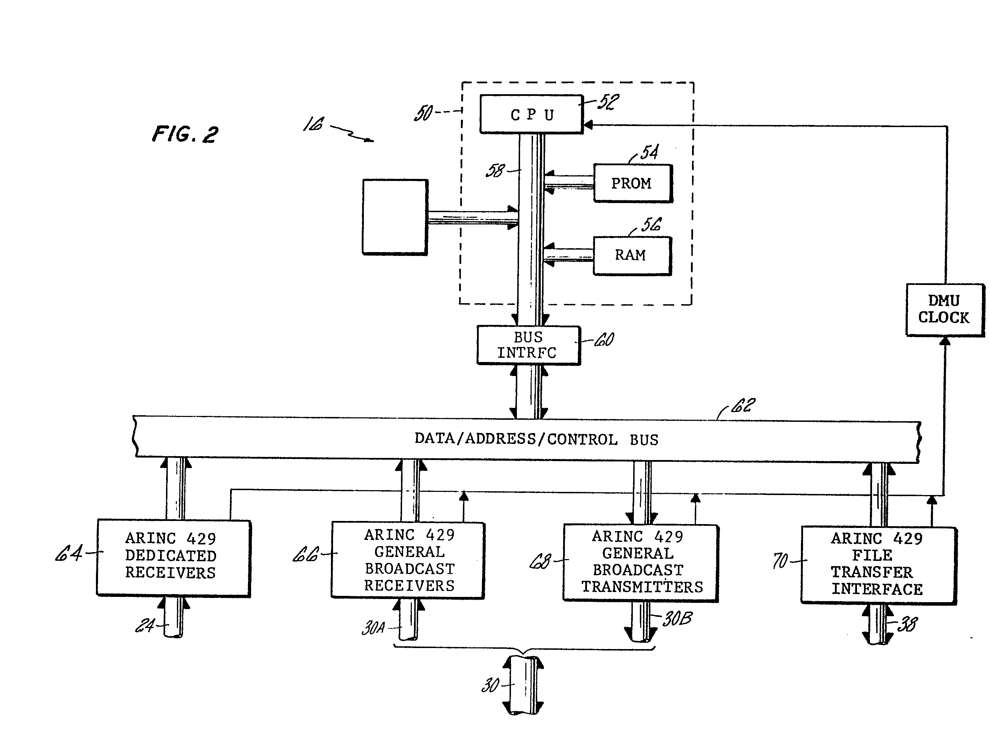

Fig. 2 is a partial system block diagram of the DMU 16 detailing the interface with the CDU. The DMU signal processor 50 includes a known type CPU 52, such as an INTEL 8086 16 bit microprocessor. The processor is capable of addressing up to one million bytes of memory, sixty-four thousand input/output (I/O) devices, and servicing more than sixty-four vectored interrupts; the major portion of this overhead capacity being required for the AIDS data management function. The signal processor includes a combination of Programmable Read Only Memory (PROM) 54 and Random Access Memory (RAM) 56, connected through processor bus 58 to the CPU. The RAM and PROM storage capacities are on the order of 28K and 64 bytes, respectively. Some of the RAM memory is implemented with EEPROM to allow preservation of any entered data in the presence of a loss of system power.

The signal processor is connected through bus interface 60 to the DMU data/address/control bus 62. Four ARINC 429 communication interfaces are connected to the data bus:  an ARINC 429 Dedicated Receiver interface 64 (for receiving the DITS inputs), ARINC 429 General Broadcast Receiver and Transmitter interfaces 66, 68 (for communications with the DAU through lines 30), and an ARINC 429 File Transfer interface 70 for communicating with the CDU.  The ARINC 429 File Transfer protocol communications link with the CDU is specified for avionic applications, but not necessary to the present invention which may be used with any suitable two-way communication protocol.

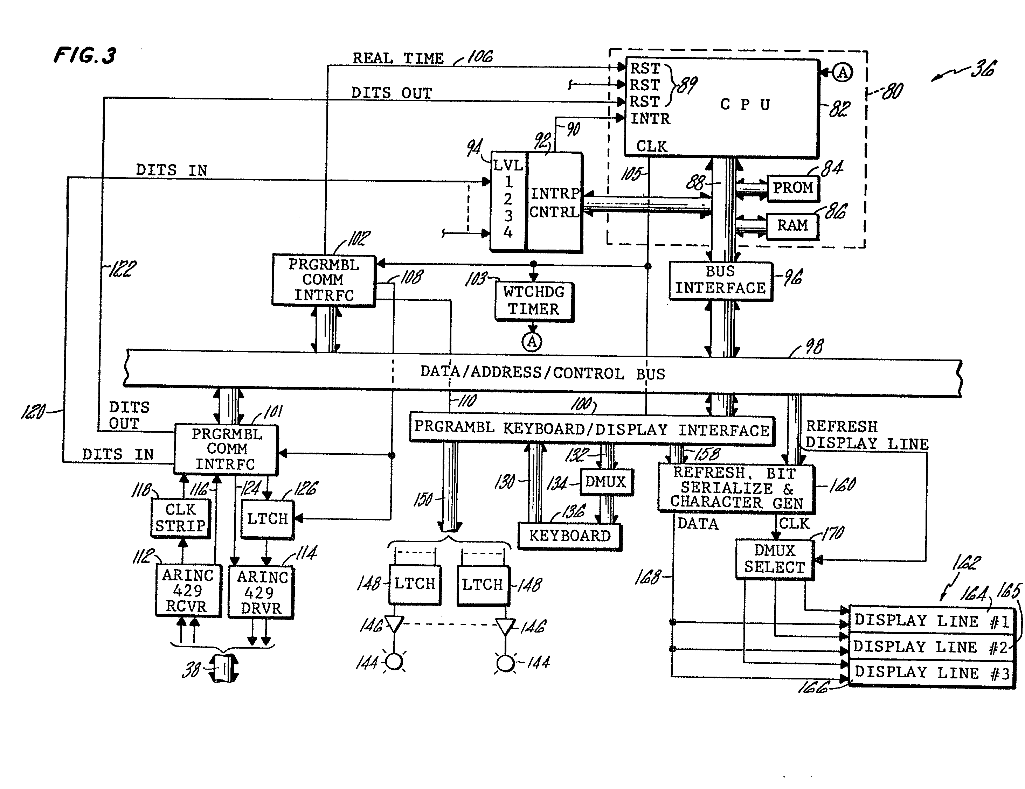

Fig. 3 is a detailed system block diagram of the CDU elements necessary to the present invention. The CDU signal processor 80 includes a known type CPU 82, such as the INTEL 8085 eight bit microprocessor, together with PROM 84 and RAM 86 memories connected to the CPU through processor bus 88.  The CDU/DMU communicate in a priority interrupt protocol.  The CPU has three prioritized reset (RST) interrupt inputs 89 supplemented by the arbitrated interrupt output 90 of a Programmable Interrupt Controller 92, connected through line 92 to the interrupt (INTR) input of the CPU.  The Interrupt Controller is a type known in the art, such as the INTEL Model 8259A, which is connected to the processor bus and which receives additional (up to seven) prioritized interrupt signals at interrupt inputs 94.  The prioritized interrupts are received from the CDU input/output (I/O) interfaces, as described hereinafter, as part of the CDU/DMU priority interrupt protocol.

The signal processor 80 is connected through bus interface 96 and the CDU data/address/control bus 98 to: a Programmable Keyboard/Display interface 100, a Programmable Communications interface 101, a Programmable Interval Timer 102, and a watchdog timer 103 which is reset at ten millisecond intervals by the CPU. The keyboard interface is a known type, such as the INTEL Model 8279. Similarly, the communications interface and interval timer are also types known in the art, such as the INTEL Models 8251A and 8253, respectively. The interval timer counts down the master clock signal from the CPU on line 105 to generate the CDU time base signals. These include a 256HZ real time interrupt signal provided on line 106 as the highest priority CPU interrupt; this is the fundamental CDU timing mark. In addition a 12.288KHZ ARINC 429 DITS clock signal is provided on line 108 to the communications interface 101 and a 64HZ display clock signal is provided on line 110 to the programmable keyboard/display interface.

The programmable communications interface 101 handles all of the CDU I/O communications on line 38 (Fig. 1) with the DMU. The communications is in an ARINC 429 File Transfer Protocol; a known standard using 32 bit words with bit 1 the LSB and bit 32 the MSB, and a nominal 12.288 KBPS rate. The two way communication is implemented by an ARINC 429 receiver 112 and driver 114, each connected to line 38. The receiver provides the serial input data through data line 116 to the receiver portion of the communications interface; "clock strip" circuitry 118 removes the received data time base information for clock recovery.

In response to each eight bits of received data, the communications interface transmits a discrete "DITS IN" interrupt on line 120 to the interrupt controller 92, and the CPU 82 has eight bit times to read the input byte. Four consecutive bytes constitute one ARINC word. Similarly, the CPU outputs each ARINC word in four consecutive bytes to the interface; one byte in response to each interface "DITS OUT" interrupt on line 122 to an RST input 89 of the CPU. The interface transmits the data through line 124 together with the clock through latch 126 to the driver 114.

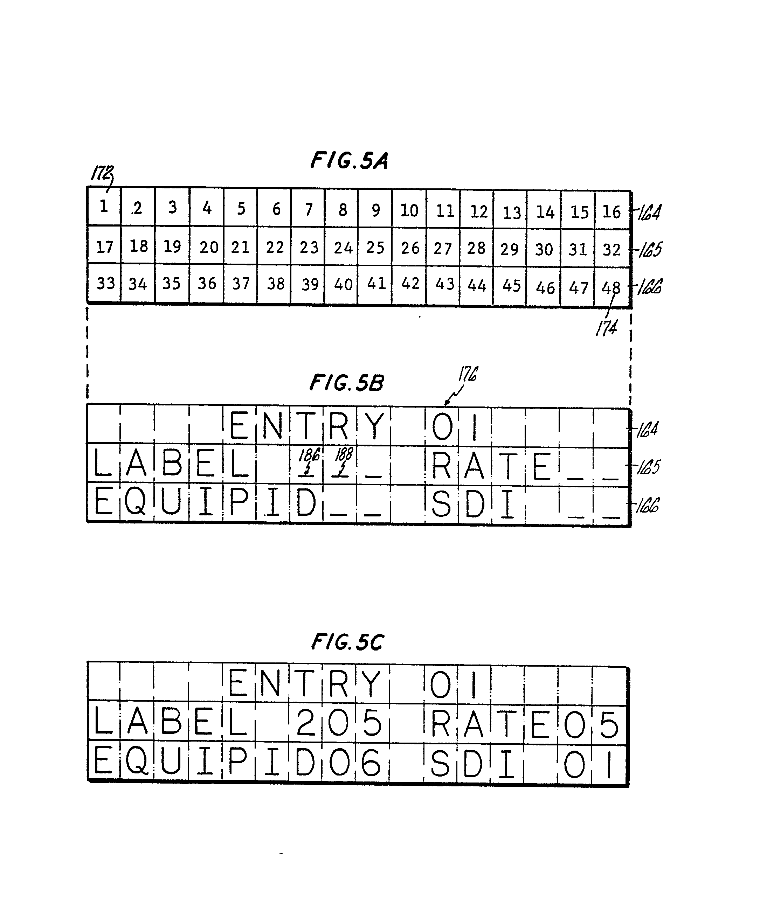

The keyboard interface 100 is connected through (I/O) lines 130, 132, and demultiplexer (DMUX) 134 to the CDU keyboard 136; a 24 key software programmable keyboard. The keyboard, with illustrative key mnemonics, is shown disposed on the CDU faceplate 138 in Fig. 4. The 24 keys are divided into twelve CDU function keys 140 and twelve data entry keys 142. The function keys are programmable by the processor 80, and are illuminated by lamps 144 under software control. As shown in Fig. 3 the lamps are driven by lamp drivers 146 and latches 148 from the keyboard interface output 150. The twelve data entry keys include the ten alpha-numeric keys shown (0-9), a clear (CLR) key 152 and an enter (IN) key 154, which together are used for data entry and for clearing selected functions and displays. One of the function keys, e.g. key 156 provides selection of either alphabetic, or numeric character entry by the data entry keys.

The programmable keyboard/display interface 100 is connected through lines 158 to the display control circuitry 160. The control circuitry provides the refresh, bit serialization, and character generation for the CDU alpha-numeric character display 162. Preferably the display is a 48 alpha-numeric character display divided into three 16 character lines 164-166; each receiving the display data from the control circuitry on line 168 together with an enabling clock signal from a display line demultiplexer 170 which gates the appropriate display line in response to a display line select signal from the CPU. The physical display is liquid crystal, or an equivalent low power reflective display, with fourteen segment characters. Typically black characters are used on a white background, with a minimum character height and width of 0.25 and 0.156 inches, respectively. The display provides fourteen segment character approximations of the 63 ASCII characters corresponding to ASCII Decimal Code values 33 through 95.

In operation, the keyboard interface scans the keyboard for key depressions in each ten millisecond watchdog timer interval. A "KEY INTERRUPT" is sent by the interface to the interrupt controller 92 in response to each key strike. Up to eight key depressions may be allowed to stack up in the interrupt controller's FIFO buffer before the processor has to perform a read. The interface provides the display data to the the display control circuitry which generates the corresponding ASCII characters in the fourteen segment character font. This includes decimal points for numerical data, which is displayed in engineering units. The CPU software controls display line selection through two bits of the CPU data bus, allowing selection of up to four lines.

In the variable data entry format of the present invention the CDU display is menu driven. Each menu is presented as a mask to the CDU display 162 on the front panel faceplate 138 (Fig. 4) of the CDU. In the preferred embodiment all but the preliminary prompt menu masks are stored in the DMU PROM 54. Each mask presents a full page of text to the display, but only three lines 164-166 of the mask are available for display to the operator at any given time. Although the number of display lines may be increased to allow simultaneous display of the full mask text, this is unnecessary, and impractical in an avionic display where size and weight limitations prevail. Instead, the full mask text is loaded from the DMU (if not resident in the CDU) and "scroll up", "scroll down" keys 168, 170 of the function key set 140 (Fig. 4) are used to move the mask up and down to allow the three display lines to access the entire mask.

For the three line, 48 character (16 characters per line) CDU display, the location of each character in the display is uniquely defined by a character identification (ID) number from 1 to 48. The numbers are assigned in an ordered sequence; preferably from left to right, first line to last. Fig. 5A illustrates the display character location ID assignments from ID=1, at the leftmost character 172 of the first line 164 (Figs. 3, 4), to the ID=48 at the rightmost character 174 of the last line 166. Each character is ASCII, byte wide, and the CDU drives the display from a minimum 48 byte table stored in the CDU RAM 86. The table is a minimum of 48 bytes to accommodate the 48 character display, but expands as necessary to accommodate each full mask content which may then be viewed three lines at a time with the scroll keys. The display table is loaded into the CDU RAM from resident CDU programs in PROM 84 or from file transfer inputs from the DMU.

The masks provided are tailored for each application depending on the information entry to be made. For data entry, the display RAM is loaded with masks having a combination of prompt indicia combined with blank spaces in which the information is to be entered by the operator. Each blank location in which a data alpha-numeric character is to be entered is identified in the mask display by the ISO Alphabet Number 5, i.e. an "underbar" _. Each underbar _ character marks a data entry location in the RAM display table. At initialization of each mask, as described hereinafter, the operator responds to each prompt question in the left to right, first line to last line sequence. This is the sequence of character ID, and the sequence of the CDU CPU in searching the display table for the first appearing underbar _ location; when the CPU finds the first underbar it stores the entered character at that location. The entered character is immediately displayed, in location, on the display. If the operator made an error it is immediately obvious, and may be corrected by depressing the CLR key 152. This clears all data entries made for the mask and the operator must begin again. The CPU then scans for the next underbar _ in the sequence and at the next data key depression the entered character is stored in this second location, and so on through the entire mask. When the mask data entry is complete, depressing the IN key 154 causes the DMU CPU 52 to read the entries and store them in RAM 56.

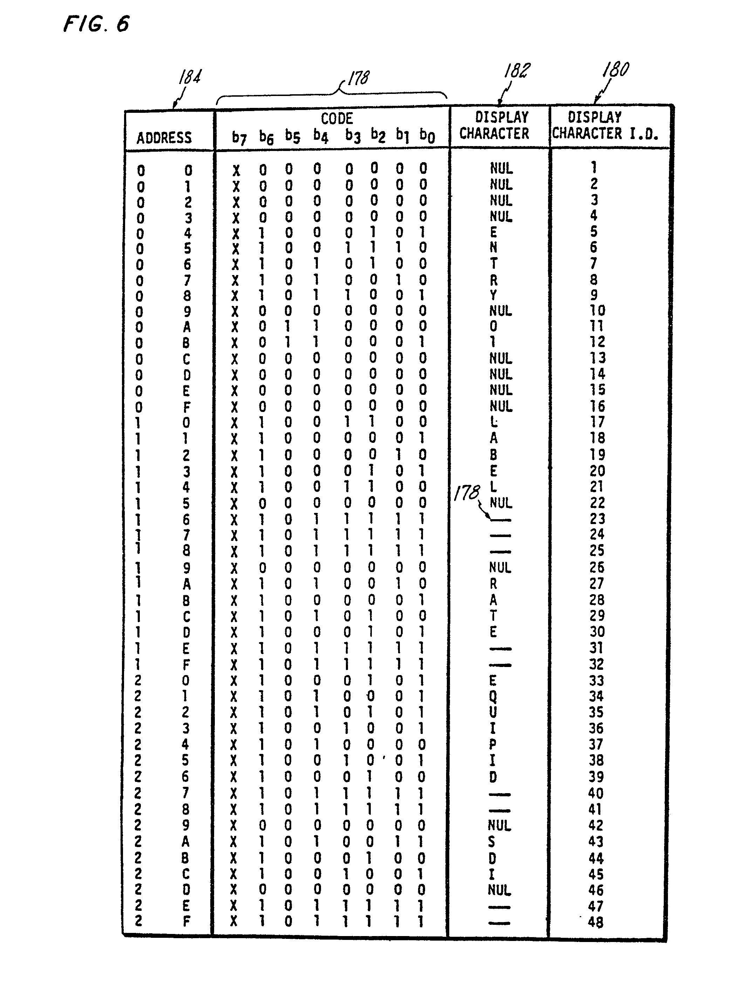

Fig. 5B illustrates a typical data entry mask format for changing the sample rate of a selected AIDS sampled parameter. The mask 176 is shown in register with the display character ID table of Fig. 5A to illustrate the association of each mask character with its ID number. Fig. 6 is a table illustrating the 48 byte RAM 86 display table for the Fig. 5B mask. The table byte content 178 is illustrated side-by-side with the display character ID numbers 180 and the displayed character 182. The table addresses in RAM are shown, in HEX, in column 184.

Comparing Figs. 5A, 5B and 6, the first four display characters a NUL (i.e. blank). The word "ENTRY" is displayed at ID locations 5-9, followed by a null, the legend "01" (representing the first mask in present sequence) in ID locations 11, 12. There are no operator data entry locations in the first line 164 of this particular mask. The second line includes the word "LABEL" in ID=17 through ID=21, followed by a NUL and the first data entry location at ID=23, marked by the ISO "underbar" _ 186.

The first data entry key depression, e.g. "2" is stored in RAM at the 16 address, and displayed following display refresh, at the ID=23 location. The next underbar 188 at ID=24, receives the next character entry, which is stored at HEX address 17. The data entry sequence continues until complete with entry 190, or aborted by the CLR key.

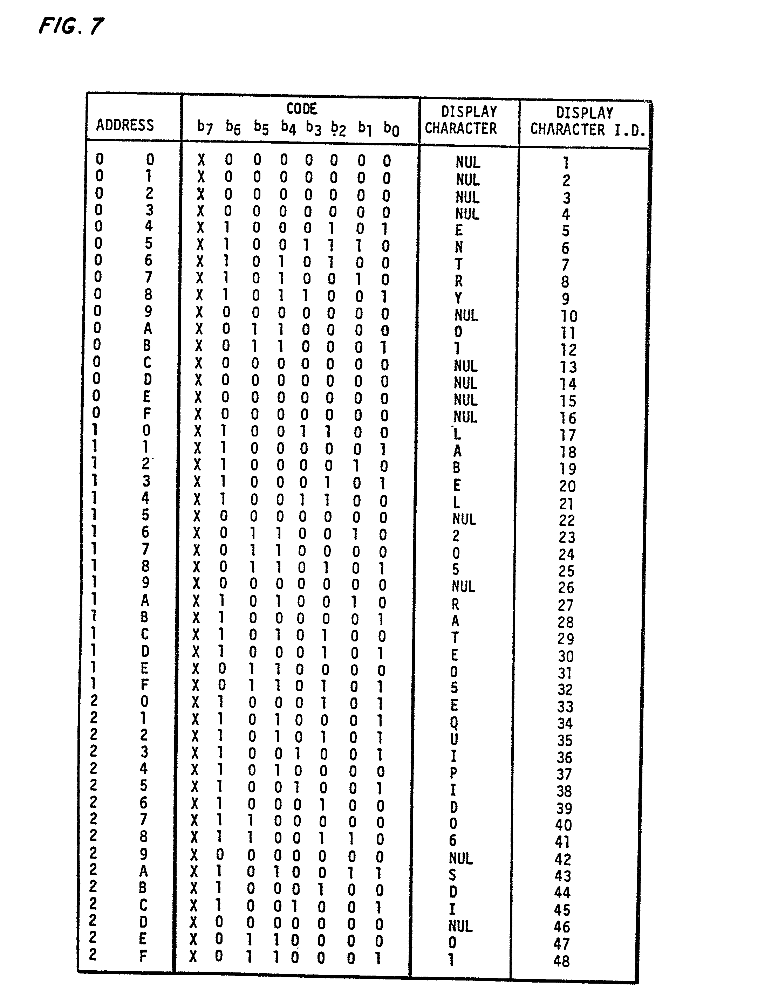

Fig. 5C illustrates a complete data entry for the mask 176, and Fig. 7 illustrates the complete RAM display table for the mask of Fig. 5C.

The CDU processor 80 provides keyboard data entry interpretation, programming of the function and data entry key, and formatting data from the RAM 86 to the display 162. The CPU functions not related to the present invention are not described, except for the CPU initialization routine. The signal processor 80 provides the initialization routine whenever power has been removed for greater than the watchdog timer interval, e.g. ten milliseconds. The initialization affects all I/O ports, CPU timers, counters, pointers, etc. to allow the CPU to begin processing information. Power loss for less than ten milliseconds is transparent.

The keyboard/display interface 100 is initialized for an encoded N-key rollover keyboard. The display portion is initialized for a 16 byte (eight bit characters) display with left entry (i.e. display data entered in each display line from left to right as viewed by the operator at the CDU faceplate 138 (Fig. 4). The programming details for initializing the interface for the INTEL Model 8279 Programmable Keyboard/Display may be found in the INTEL publication entitled "Peripheral Design Handbook", February 1979.

Following initialization the CDU first initiates communications with the DMU through communications interface 101 in the File Transfer Protocol (FTP) with the DMU FTP interface 70 (Fig. 2). Each 32 bit FTP word includes a first byte label identifying the word content. The CDU and DMU each receive and transmit the ARINC words: Request to Send (RTS), Clear to Send (CTS), Data Follows, Final, Intermediate, Data Received OK (ACK), and Data Receive Not (OK) (NAK), using the ISO number five control characters in bits 23-29 and the sign status matrix in bits 30 and 31, as defined in ARINC 429. In operation, the unit transmitting ("source") first sends an RTS to the unit receiving ("sink"). The sink response is a CTS word. The source then sends the message with a Data Follows word, followed by some number of intermediate (data) words, and a Final Word. The Final Word is a check for the sink to see if the number of words received corresponds to that listed in the Final Word. If okay, the sink transmits an ACK message and communications is complete; if not okay, the sink sends a NAK message. In this case the source retransmits the RTS and data block four additional times or until an ACK is received. If no ACK is received the communications attempt is terminated.

The CDU operates in one of five modes. These include (i) idle, (ii) push-button selection, (iii) data entry, (iv) data display, and (v) menu display. The CDU is idle when no function keys 140 are "in progress". When any function key is depressed the CDU enters the push-button selection mode, where each key depression interrupts the CPU, which read the key strokes. With the exception of the scroll keys 168, 170, polarity key 190 and the alphabetic/ numeric selection key 156, depression of any of the remaining eight function keys initiate a communications sequence with the DMU. For the AIDS of Fig. 1, in which there are multiple data sources (DMU, DAU), depression of the DATA key 194 and MEM key 196 does not immediately establish the communications sequence since the CDU must first determine which AIDS data source is desired. In other words, the DATA/MEM keys first require preliminary prompt masks resident in the CDU to interrogate the operator as to the selected one of multiple sources chosen for either data entry, data monitoring, or memory modification. For example, depression of the MEM key 192 results in a display of a CDU PROM (84) resident mask requesting operator selection of the memory source, e.g. DMU or DAU. The selection results in a second CDU resident mask requiring operator choice of operations to be performed with the selected memory. The operation choice then results in establishing a CDU communications link with the selected memory source.

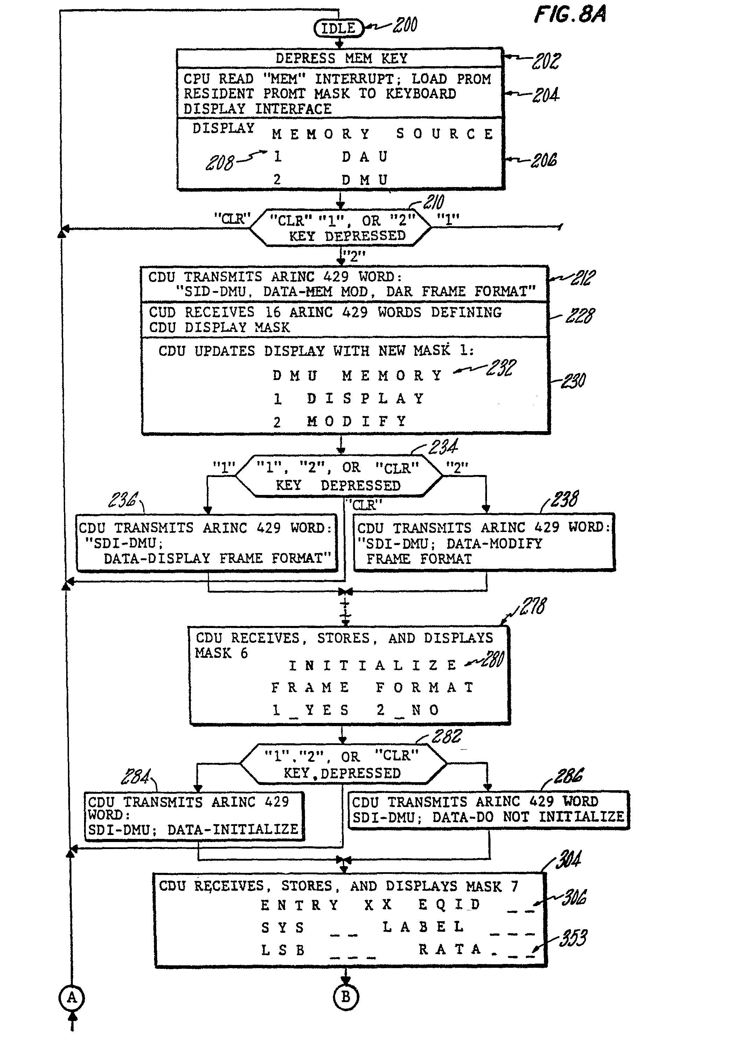

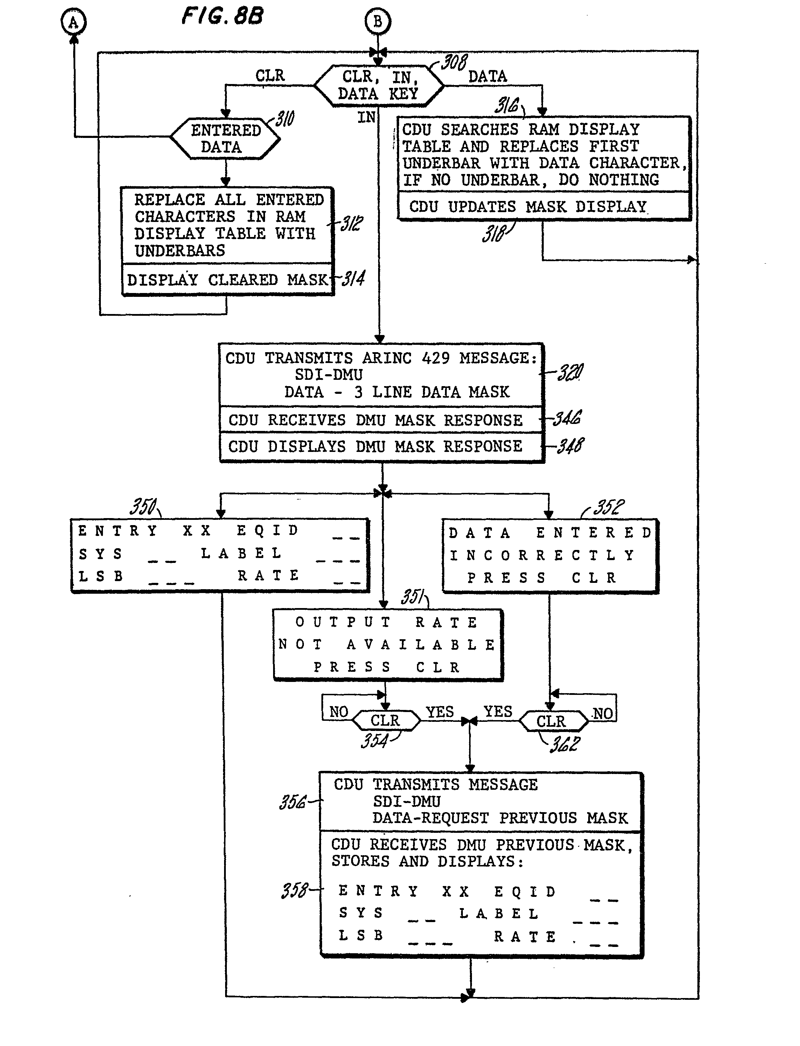

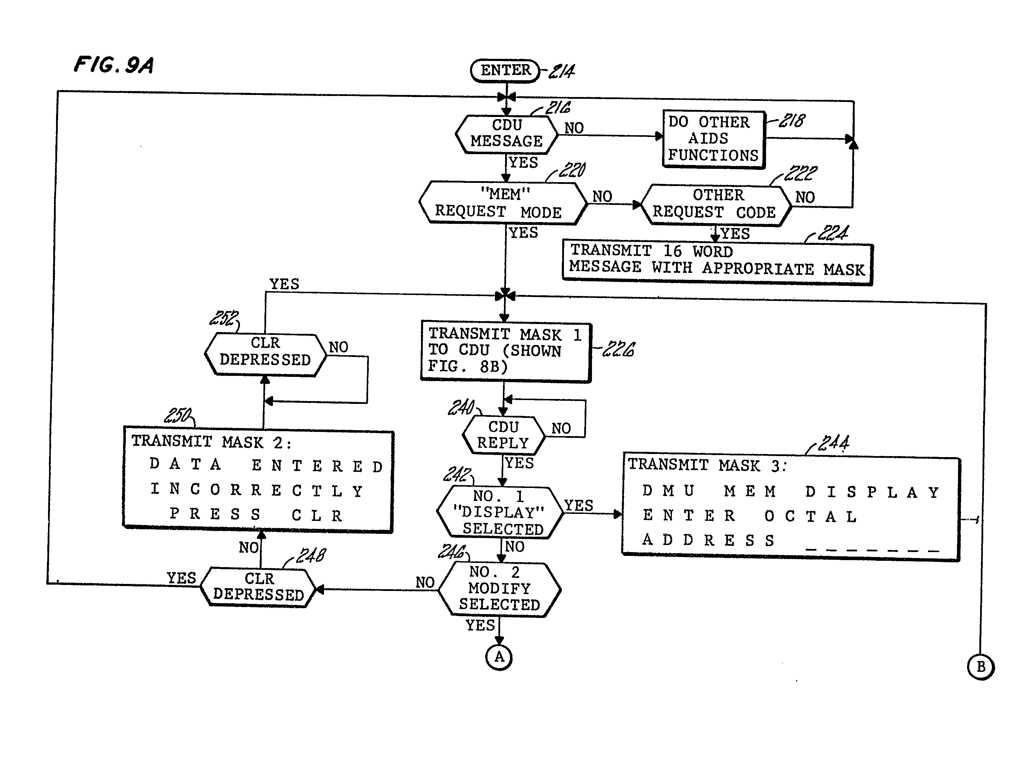

Figs. 8A, 8B, are flowcharts illustrating the variable data entry format of the CDU in providing operator interface with the AIDS, for an exemplary data entry sequence. With the CDU in the idle mode 200, depression of the MEM key (196, Fig. 4) results in a MEM interrupt 204 to the CPU (82, Fig. 3), which reads the key stroke and loads the CDU resident PROM PROMPT mask to interface 100. In this instance the mask provides option prompt queque signals requiring operator selection of one of two data sources. In instructions 206 the interface displays the prompt interrogatory mask 208, requiring an operator selection in order to continue the sequence.

Decision 210 determines which of the three permitted response key strokes have been entered to the keyboard (136, Figs. 3, 4); only a CLR, or the numbers 1, 2 are accepted in the presence of the PROMPT mask 208. A CLR results in the CDU branch back to the idle mode 200. A "1" key stroke selects the DAU (14, Fig. 1) and a "2" key stroke selects the DMU (16, Fig. 1). Assuming the DMU is selected the CDU transmits an ARINC 429 message 212 to the DMU. The message contains a MEM (memory) request code for DMU memory modification of the data frame format for the AIDS recorder (AR) 32, Fig. 1.

Figs. 9A-9D are flowchart diagrams illustrating the DMU response to the Figs. 8A, 8B CDU memory modification sequence. The DMU signal processor 50 enters the flowchart at 214, and decision 216 determines if a CDU message has been received. If NO, the DMU performs other AIDS related functions 218 and branches back to decision 216. When a CDU message is received, decision 220 determines if the CDU word is a MEM request code (as opposed to a data code, etc.). If NO, decision 222 determines if the word contains a request code for some other data entry format. If NO, the CPU returns to decision 216; if YES, the DMU transmits 16 ARINC words with the requested code mask in instructions 224. It should be understood that decision 222 itself may represent multiple, iterative steps of the DMU in determining which "other request code" is presented. These steps are not related to the present example and, therefore, not discussed here.

If decision 220 is a YES, the CPU transmits a 16 word ARINC message defining the first DMU resident mask (i.e. mask 1) in the MEM request code data entry sequence. In Fig. 8A, the CDU receives the first DMU mask message 228. In instructions 228 it stores the mask 230 in the RAM display table, and updates the CDU display.

The mask requires operator selection of a data display, or a data entry (e.g. modify) mode. Only a CLR, a "1", or a "2" key stroke is recognized while the mask 230 is displayed. Decision 234 determines which key strokes have been made. A CLR results in branch back to the idle mode 200. A "1" or "2" key stroke result in the appropriate CDU ARINC word to the DMU requesting either a DISPLAY in instructions 236, or a MODIFY in instructions 238.

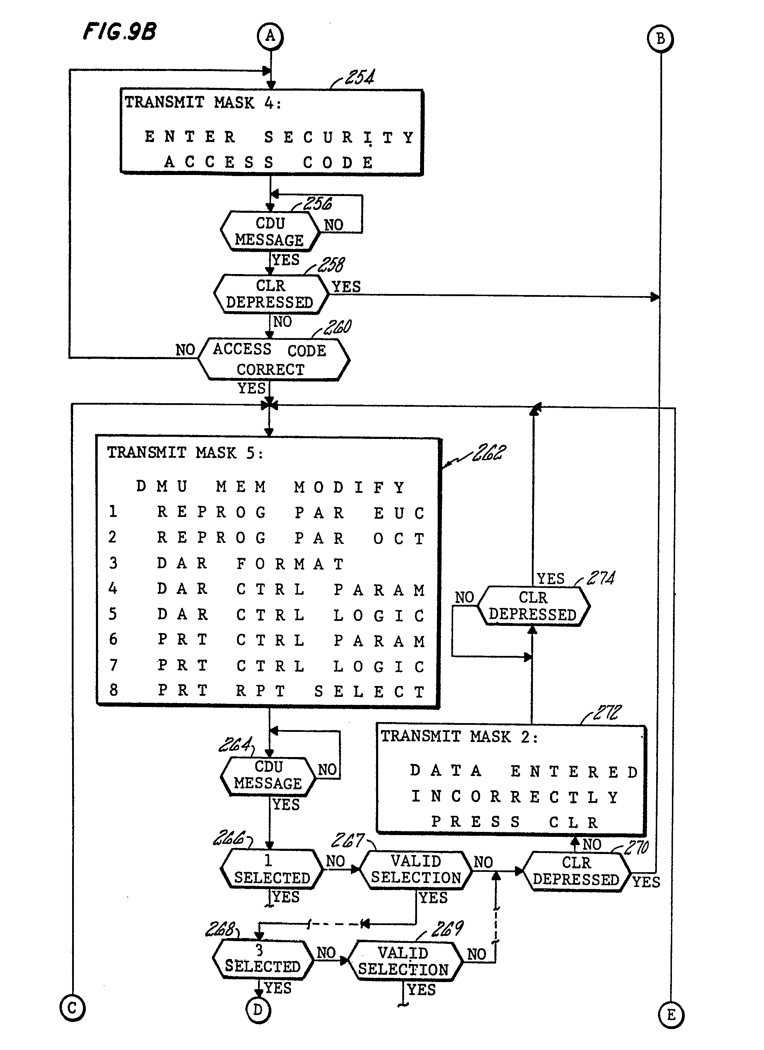

In Fig. 9B, the DMU waits at pause 240 for the CDU response and decision 242 determines if the DISPLAY option is selected. If YES, instructions 244 transmit the illustrated DMU mask number 3 to the CDU. If DISPLAY is not selected, decision 246 determines if the MODIFY option is selected. In the present sequence assume that modify is chosen; otherwise decision 246 results in a NO, indicating an operator error or a decision to abort the data entry sequence. Decision 248 determines if there is a present CLR key strike. If YES, the DMU realizes that the present data entry sequence has been aborted and it branches back to decision 216. If NO, CLR instructions 250 cause the DMU to transmit the illustrated mask number 1 to the CDU. Mask 2 is an error message requiring a CLR to continue. Decision 252 monitors the CLR, and when selected, the DMU processor branches to instructions 226 to retransmit mask 1.

If decision 246 is YES, the DMU transmits an ARINC 16 word message defining DMU mask number 4, in instructions 254, (Fig. 9B) requesting operator entry of an access code. Decision 256 monitors the CDU reply. Decision 258 determines the presence of a CLR, and if YES, branches back to instructions 226 (Fig. 9A) to retransmit the mask. If NO CLR, decision 260 next determines if the access code is correct. If not correct, the CPU branches back to instructions 254. The operator sequence in entering the access code is not illustrated in Figs. 8A, B, to simplify the description.

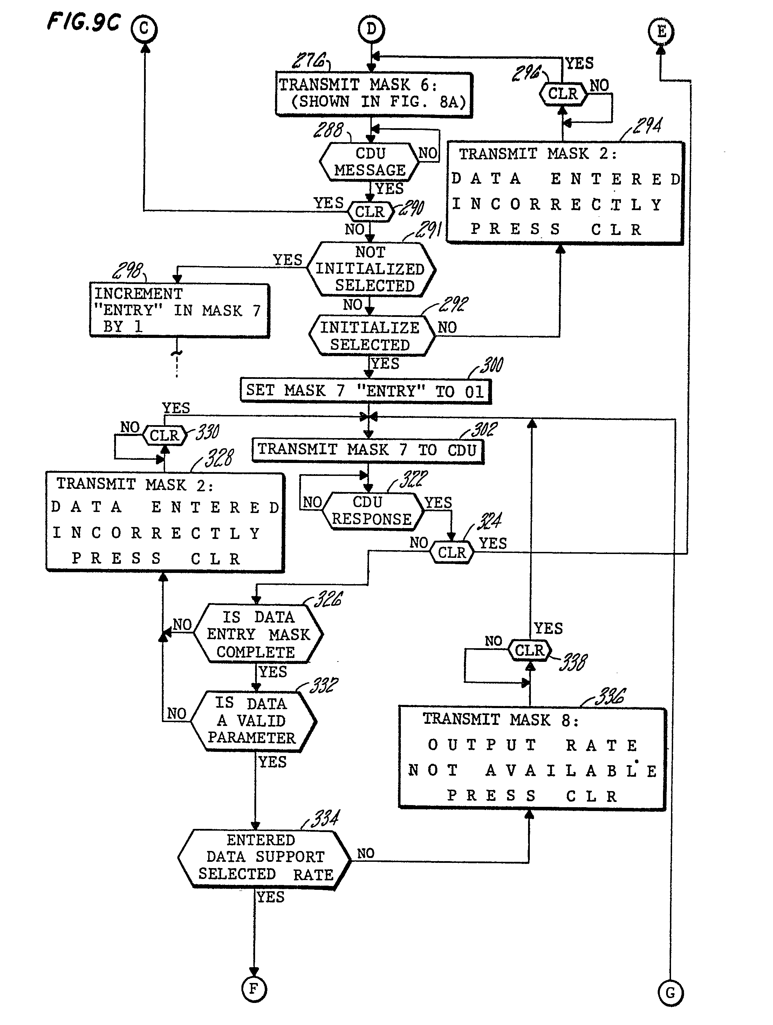

With the correct access code entered, and the MODIFY option selected, the DMU transmits directory mask number 5 in instructions 262; a listing of eight modifiable parameters in the DMU memory. Decision 264 monitors the CDU reply, and decisions 266-269 represent part of an iterative process of determining which of the eight parameters are selected. Decision 266 determines if the first parameter was selected. If YES, the appropriate mask is then forwarded to the CDU. If NO, decision 267 determines if the CDU has made a valid selection. If a valid selection, the DMU continues on to the next selectable parameter and so on until decision 268 determines if number 3 is selected. Assuming that it is, a YES results and the processor continues the data entry sequence for parameter number 3 in Fig. 9C. For an invalid selection (a NO in 267, 269) decision 270 determines if a CLR has been depressed, i.e. an operator abort. If YES, the DMU branches back to instructions 226 (Fig. 9A). If NO, instructions 272 transmit the error message mask to the CDU. Decision 274 determines the presence of an operator CLR, and when detected branches back to instructions 262.

In response to operator selection of the number 3 parameter, i.e. "DAR FORMAT", instructions 276 (Fig. 9C) transmit masks number 6 to the CDU. The CDU receives the mask in instructions 278 (Fig. 8A), and stores and displays the mask 208 illustrated. The mask requires an operator decision to create an entirely new frame format (initialize), or simply change one or more of the present format entries (not initialize). The CDU monitors the keyboard, and decision 282 determines which of three keys have been pressed; a "1" to initialize, a "2" not initialize, or a "CLR" to abort. The appropriate messages are sent to the DMU in instructions 284, 286.

In Fig. 9C the DMU processor monitors the CDU response in decision 288. Decisions 290-292 perform an iterative process of determining which of the three entries were made. Decision 290 determines if a CLR was pressed. If YES, the DMU processor branches back to instructions 262 (Fig. 9B); if NO, decision 291 determines if "not initialized" was selected. If NO to decision 291, decision 292 determines if initialize was selected. If this answer is also NO then the DMU presumes an invalid entry and instructions 294 transmit the error mask number 2 to the CDU. Decision 296 monitors the entry of a CLR to the error mask message, and when entered the DMU processor branches back to instructions 276. In response to a "not initialize" selection (YES to decision 291) instructions 298 request the increment of mask 7 "ENTRY" to allow the DMU to keep track of the number of modifications to the selected parameter since last initialized.  In response to selection of the initialized option, (a YES to decision 292) instructions 300 request the setting of the "ENTRY" number to 01; the first entry in the newly initialized parameter format.  In instructions 302 the DMU transmits the mask number 7 to the CDU.

In Fig. 8A, instructions 304, the CDU receives mask 7 (306) and stores and displays the mask.  The mask is shown with the "ENTRY" 01 update.  The CDU processor enters the Data Entry routine.  In this sequence the CDU writes all operator entered data, in the sequence previously described, at each of the data entry queue  signals, e.g. the underbar locations in the data mask.  This is done in the CPU (82) scratch pad buffer (the first buffer).  The data entry sequence begins with decision 308 in Fig. 8B, which determines whether a data, a CLR, or an IN key has been depressed. A CLR either aborts the entire entry data sequence, or refreshes the mask to eliminate an incorrect data entry.  As a result, in response to a CLR, decision 310 determines if there is previously entered data in the mask.  If NO, the CDU processor assumes that without entered data that the operator wishes to abort the present data entry sequence, and branches back to the idle state 200 (Fig. 8A).  If there is entered data, instructions 312 cause the CPU to replace all entered data characters with underbars in the RAM display table.  Instructions 314 then displays a cleared mask and the CPU branches back to decision 308.

In response to a data key depression (alpha-numeric character), instructions 316 require the CPU processor to search the RAM display table, in the selected sequence, and replace the first underbar found with the entered data character. As described before the preferred sequence is from left to right, from first line to last line. If no underbar is found the entry is ignored since the mask entries are complete. Instructions 318 update the displayed mask with the latest entry. Following a full mask data entry the operator must insert the mask by pressing the IN key. If the IN key is pressed, instructions 320 transmit an ARINC 16 word message to the DMU, describing the completed mask. In Fig. 9C the DMU waits for the CDU response. If a CLR (abort), the DMU processor branches back to instructions 262 (Fig. 9B). If not a CLR, decision 326 determines if the message is a completed data mask; it determines if all underbar characters have been replaced by data. If NO, the message is an incomplete data entry attempt, and not accepted. In this case instructions 328 transmit the error message mask 2 "incorrect data entry", followed by a CLR monitor 330, and branch back to instructions 302. If decision 326 is YES, decision 332 determines if the entered data is valid parameter information. If NO, the DMU again transmits the error message of 328; if YES, decision 334 determines if the entered data is "in keeping" with the selected data rate, and if not, instructions 336 transmit error message mask number 8 shown, to notify the operator that the selected data rate is not available and that he must press CLR to begin a new sequence. Decision 338 monitors the CDU CLR after which the DMU processor branches back to instructions 302.

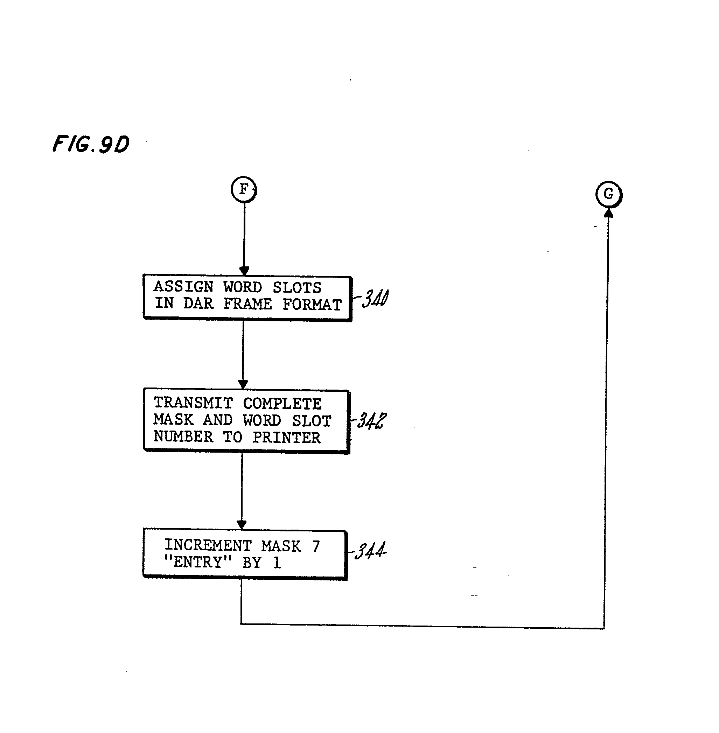

If the selected data rate is suitable for the particular parameter, instructions 340 (Fig. 9D) assign the modifications to word slots in the DAR frame format. Instructions 342 transmit the modifications and word slots to the AIDS printer (34, Fig. 1) and instructions 344 to increment the mask 7 "ENTRY" number by one, in anticipation of the next parameter entry for the DAR frame format.

The CDU receives the DMU responding mask to the previously completed mask entry in instructions 346 (Fig. 8B), and instructions 348 display the DMU response. The particular DMU responding mask depends on the results of DMU decisions 326 et seq. (Fig. 9C). Fig. 8B illustrates the possible DMU response masks. Three masks, 350-352 are shown, corresponding to those transmitted by the DMU in instructions 302, 328, 336 of Fig. 9C. Masks 350 (DMU 344, 302) is the new data mask for the next parameter of the same MODIFY option, i.e. for operator modification of a second AIDS parameter. The "XX" represents the ENTRY number for the next MODIFY entry. The CDU branches to decision 308 to begin the new mask Data Entry sequence.

Masks 351, 352 are error messages. Each require CLR response queue signals. The mask 351 (DMU, 336) notifies the operator that the selected rate entry 353 of mask 306 (Fig. 8A) is not valid; he must CLR and try again. Decision 354 monitors the operator entered CLR in response to the prompt queue, and when received instructions 356 transmit a request to the DMU for the previous mask. In instructions 358, the CDU receives, stores, and displays the previous mask 360. Once again the "XX" represents the next ENTRY number. Following instructions 358 the CDU branches to decision 308 to service the new data entry sequence.

Finally, error message mask 352 (DMU, 328) notifys the operator of an incorrect data entry. Decision 362 monitors the necessary CLR. When received the CDU continues to instructions 356 requesting the DMU previous mask as described hereinbefore.

The exemplary data entry sequence of Figs. 8, 9 illustrates the flexibility and user friendly characteristics of the present invention. The mask format and indicia are only illustrative; representing that indicia and nomenclature associated with AIDS. However, the procedure clearly illustrates the use of the queue prompt signals; both data entry queue signals requiring operator data character entry at specified locations of the mask, and prompt option queue signals in which the operator must select the desired one from a plurality of alternative options, i.e. the response queue signals requires an operator CLR to abort or refresh a particular display or sequence.

In the present invention the exact mask format is not important. What is important is that the masks communicate a message to the operator to invoke a dialog. The operator response may be the selection of more than one option (e.g. YES/NO), the entry of data, or aborting the sequence, thereby abandoning the particular dialog.

The interface apparatus signal processor may itself provide storage of all masks used for the operator, instead of sharing mask storage with the parent system signal processor as described with respect to the AIDS application. This, as may be obvious to those skilled in the art, is design choice.

Although the invention has been shown and described with respect to a best mode embodiment thereof, it should be understood by those skilled in the art that various other changes, omissions, and additions may be made therein without departing from the spirit and scope of the invention.

Claims

1. Interface apparatus for providing a communications interface between an operator and a signal processor based information system, comprising:

signal communications means, for exchanging signal information with the information system;

keyboard means, responsive to operator manipulation for providing keyboard signals indicative of operator entered information;

display means, having display elements, each identified by its location in the display arrangement and each displaying individual character indicia in response to character signals presented thereto; and

interface signal processor means, responsive, through said communications means, to the information system signal processor, and responsive to said keyboard signals, said interface signal processor including memory means for storing a plurality of character signals arranged in one or more groups, each group collective character signal indicia providing a group mask for displaying an operator intelligible message on said display means, said interface signal processor presenting each group mask to said display means in response, alternately, to said keyboard signals entered by the operator and to signals from the information system signal processor, each mask message including queue signals for prompting operator response by keyboard entry to maintain operator dialog with the information system.

2.    The apparatus of claim 1, wherein said queue signals restrict the prompted operator response to specific alternative actions, each alternative action having an associated response by said interface signal processor in presenting to said display means, one of said character signal group masks from said memory means displaying a message related to the chosen alternative action, whereby the particular mask displayed is within the control of the operator.

3.    The apparatus of claim 2, wherein said queue signals further include data entry queue signals and said specific alternative actions include operator data entry, the operator data entry sequence being controlled by said data entry queue signal characters positioned in each data entry mask at locations therein at which operator entered keyboard signal data may be entered, said interface signal processor replacing each data entry queue signal in a displayed data entry mask with an operator entered keyboard signal character, in sequence from a first data entry queue signal location to a last data entry queue signal location.

4.    The apparatus of claim 2, wherein said character signal indicia is alpha-numeric.

5.    The apparatus of claim 3, wherein said display means comprises alpha-numeric display elements arranged in one or more rows, each display element identified to said interface signal processor by the relative location of said element in said display means to a last element in a last row of said display means.

6. The apparatus of claim 5 wherein said display means comprises 48 alpha-numeric display elements arranged in three rows of 16 display elements each.

7. The apparatus of claim 5, wherein said display means comprises low power reflective display elements, each element having multiple segments responsive to character signals presented thereto for selective excitation of segments to provide the related alpha-numeric character.

8. The apparatus of claim 7, wherein said low power reflective display comprises liquid crystal display. elements.

9. The apparatus of claim 3, wherein said data entry queue signal characters are arranged in each data entry mask, in proximate position to associated parameter indicia, whereby each data entry location is identified to the operator.

10. The apparatus of claim 3, wherein said data entry queue signal characters are representative of an underbar character in the data entry mask.

11. The apparatus of claim 3, wherein said interface signal processor, in the presence of the data entry alternative action, samples each keyboard signal and stores each sampled signal in the first available data entry queue signal location in the data entry mask, said processor detecting each available data entry location by reading the locations of each signal character of the mask in sequence, from a first location to a last location.

*FIG. 1*

*FIG. 4*

**FIG. 2**

DATA/ADDRESS/CONTROL BUS — 62

CPU — 52

50

58

PROM — 54

RAM — 56

BUS INTRFC — 60

16

DMU CLOCK

ARINC 429 DEDICATED RECEIVERS — 64

ARINC 429 GENERAL BROADCAST RECEIVERS — 66

ARINC 429 GENERAL BROADCAST TRANSMITTERS — 68

ARINC 429 FILE TRANSFER INTERFACE — 70

24

30A

30B

38

30

FIG.3

**FIG.5A**

| 1 | 2 | 3 | 4 | 5 | 6 | 7 | 8 | 9 | 10 | 11 | 12 | 13 | 14 | 15 | 16 | — 164 |
| 17 | 18 | 19 | 20 | 21 | 22 | 23 | 24 | 25 | 26 | 27 | 28 | 29 | 30 | 31 | 32 | — 165 |
| 33 | 34 | 35 | 36 | 37 | 38 | 39 | 40 | 41 | 42 | 43 | 44 | 45 | 46 | 47 | 48 | — 166 |

172

174

**FIG.5B**

176

| | | | E | N | T | R | Y | | O | I | | | | | — 164 |
| L | A | B | E | L | | 186 1 | 188 1 | _ | | R | A | T | E | _ | _ | — 165 |
| E | Q | U | I | P | I | D | _ | _ | | S | D | I | | _ | _ | — 166 |

**FIG.5C**

| | | | E | N | T | R | Y | | O | I | | | | |
| L | A | B | E | L | | 2 | 0 | 5 | | R | A | T | E | 0 | 5 |
| E | Q | U | I | P | I | D | 0 | 6 | | S | D | I | | O | I |

0153897

# FIG. 6

| ADDRESS | | CODE b7 | b6 | b5 | b4 | b3 | b2 | b1 | b0 | DISPLAY CHARACTER | DISPLAY CHARACTER I.D. |
|---|---|---|---|---|---|---|---|---|---|---|---|
| 0 | 0 | X | 0 | 0 | 0 | 0 | 0 | 0 | 0 | NUL | 1 |
| 0 | 1 | X | 0 | 0 | 0 | 0 | 0 | 0 | 0 | NUL | 2 |
| 0 | 2 | X | 0 | 0 | 0 | 0 | 0 | 0 | 0 | NUL | 3 |
| 0 | 3 | X | 0 | 0 | 0 | 0 | 0 | 0 | 0 | NUL | 4 |
| 0 | 4 | X | 1 | 0 | 0 | 0 | 1 | 0 | 1 | E | 5 |
| 0 | 5 | X | 1 | 0 | 0 | 1 | 1 | 1 | 0 | N | 6 |
| 0 | 6 | X | 1 | 0 | 1 | 0 | 1 | 0 | 0 | T | 7 |
| 0 | 7 | X | 1 | 0 | 1 | 0 | 0 | 1 | 0 | R | 8 |
| 0 | 8 | X | 1 | 0 | 1 | 1 | 0 | 0 | 1 | Y | 9 |
| 0 | 9 | X | 0 | 0 | 0 | 0 | 0 | 0 | 0 | NUL | 10 |
| 0 | A | X | 0 | 1 | 1 | 0 | 0 | 0 | 0 | 0 | 11 |
| 0 | B | X | 0 | 1 | 1 | 0 | 0 | 0 | 1 | 1 | 12 |
| 0 | C | X | 0 | 0 | 0 | 0 | 0 | 0 | 0 | NUL | 13 |
| 0 | D | X | 0 | 0 | 0 | 0 | 0 | 0 | 0 | NUL | 14 |
| 0 | E | X | 0 | 0 | 0 | 0 | 0 | 0 | 0 | NUL | 15 |
| 0 | F | X | 0 | 0 | 0 | 0 | 0 | 0 | 0 | NUL | 16 |
| 1 | 0 | X | 1 | 0 | 0 | 1 | 1 | 0 | 0 | L | 17 |
| 1 | 1 | X | 1 | 0 | 0 | 0 | 0 | 0 | 1 | A | 18 |
| 1 | 2 | X | 1 | 0 | 0 | 0 | 0 | 1 | 0 | B | 19 |
| 1 | 3 | X | 1 | 0 | 0 | 0 | 1 | 0 | 1 | E | 20 |
| 1 | 4 | X | 1 | 0 | 0 | 1 | 1 | 0 | 0 | L | 21 |
| 1 | 5 | X | 0 | 0 | 0 | 0 | 0 | 0 | 0 | NUL | 22 |
| 1 | 6 | X | 1 | 0 | 1 | 1 | 1 | 1 | 1 | — | 23 |
| 1 | 7 | X | 1 | 0 | 1 | 1 | 1 | 1 | 1 | — | 24 |
| 1 | 8 | X | 1 | 0 | 1 | 1 | 1 | 1 | 1 | — | 25 |
| 1 | 9 | X | 0 | 0 | 0 | 0 | 0 | 0 | 0 | NUL | 26 |
| 1 | A | X | 1 | 0 | 1 | 0 | 0 | 1 | 0 | R | 27 |
| 1 | B | X | 1 | 0 | 0 | 0 | 0 | 0 | 1 | A | 28 |
| 1 | C | X | 1 | 0 | 1 | 0 | 1 | 0 | 0 | T | 29 |
| 1 | D | X | 1 | 0 | 0 | 0 | 1 | 0 | 1 | E | 30 |
| 1 | E | X | 1 | 0 | 1 | 1 | 1 | 1 | 1 | — | 31 |
| 1 | F | X | 1 | 0 | 1 | 1 | 1 | 1 | 1 | — | 32 |
| 2 | 0 | X | 1 | 0 | 0 | 0 | 1 | 0 | 1 | E | 33 |
| 2 | 1 | X | 1 | 0 | 1 | 0 | 0 | 0 | 1 | Q | 34 |
| 2 | 2 | X | 1 | 0 | 1 | 0 | 1 | 0 | 1 | U | 35 |
| 2 | 3 | X | 1 | 0 | 0 | 1 | 0 | 0 | 1 | I | 36 |
| 2 | 4 | X | 1 | 0 | 1 | 0 | 0 | 0 | 0 | P | 37 |
| 2 | 5 | X | 1 | 0 | 0 | 1 | 0 | 0 | 1 | I | 38 |
| 2 | 6 | X | 1 | 0 | 0 | 0 | 1 | 0 | 0 | D | 39 |
| 2 | 7 | X | 1 | 0 | 1 | 1 | 1 | 1 | 1 | — | 40 |
| 2 | 8 | X | 1 | 0 | 1 | 1 | 1 | 1 | 1 | — | 41 |
| 2 | 9 | X | 0 | 0 | 0 | 0 | 0 | 0 | 0 | NUL | 42 |
| 2 | A | X | 1 | 0 | 1 | 0 | 0 | 1 | 1 | S | 43 |
| 2 | B | X | 1 | 0 | 0 | 0 | 1 | 0 | 0 | D | 44 |
| 2 | C | X | 1 | 0 | 0 | 1 | 0 | 0 | 1 | I | 45 |
| 2 | D | X | 0 | 0 | 0 | 0 | 0 | 0 | 0 | NUL | 46 |
| 2 | E | X | 1 | 0 | 1 | 1 | 1 | 1 | 1 | — | 47 |
| 2 | F | X | 1 | 0 | 1 | 1 | 1 | 1 | 1 | — | 48 |

## FIG. 7

| ADDRESS | | CODE b7 b6 b5 b4 b3 b2 b1 b0 | | | | | | | | DISPLAY CHARACTER | DISPLAY CHARACTER I.D. |
|---|---|---|---|---|---|---|---|---|---|---|---|
| 0 | 0 | X | 0 | 0 | 0 | 0 | 0 | 0 | 0 | NUL | 1 |
| 0 | 1 | X | 0 | 0 | 0 | 0 | 0 | 0 | 0 | NUL | 2 |
| 0 | 2 | X | 0 | 0 | 0 | 0 | 0 | 0 | 0 | NUL | 3 |
| 0 | 3 | X | 0 | 0 | 0 | 0 | 0 | 0 | 0 | NUL | 4 |
| 0 | 4 | X | 1 | 0 | 0 | 0 | 1 | 0 | 1 | E | 5 |
| 0 | 5 | X | 1 | 0 | 0 | 1 | 1 | 1 | 0 | N | 6 |
| 0 | 6 | X | 1 | 0 | 1 | 0 | 1 | 0 | 0 | T | 7 |
| 0 | 7 | X | 1 | 0 | 1 | 0 | 0 | 1 | 0 | R | 8 |
| 0 | 8 | X | 1 | 0 | 1 | 1 | 0 | 0 | 1 | Y | 9 |
| 0 | 9 | X | 0 | 0 | 0 | 0 | 0 | 0 | 0 | NUL | 10 |
| 0 | A | X | 0 | 1 | 1 | 0 | 0 | 0 | 0 | 0 | 11 |
| 0 | B | X | 0 | 1 | 1 | 0 | 0 | 0 | 1 | 1 | 12 |
| 0 | C | X | 0 | 0 | 0 | 0 | 0 | 0 | 0 | NUL | 13 |
| 0 | D | X | 0 | 0 | 0 | 0 | 0 | 0 | 0 | NUL | 14 |
| 0 | E | X | 0 | 0 | 0 | 0 | 0 | 0 | 0 | NUL | 15 |
| 0 | F | X | 0 | 0 | 0 | 0 | 0 | 0 | 0 | NUL | 16 |
| 1 | 0 | X | 1 | 0 | 0 | 1 | 1 | 0 | 0 | L | 17 |
| 1 | 1 | X | 1 | 0 | 0 | 0 | 0 | 0 | 1 | A | 18 |
| 1 | 2 | X | 1 | 0 | 0 | 0 | 0 | 1 | 0 | B | 19 |
| 1 | 3 | X | 1 | 0 | 0 | 0 | 1 | 0 | 1 | E | 20 |
| 1 | 4 | X | 1 | 0 | 0 | 1 | 1 | 0 | 0 | L | 21 |
| 1 | 5 | X | 0 | 0 | 0 | 0 | 0 | 0 | 0 | NUL | 22 |
| 1 | 6 | X | 0 | 1 | 1 | 0 | 0 | 1 | 0 | 2 | 23 |
| 1 | 7 | X | 0 | 1 | 1 | 0 | 0 | 0 | 0 | 0 | 24 |
| 1 | 8 | X | 0 | 1 | 1 | 0 | 1 | 0 | 1 | 5 | 25 |
| 1 | 9 | X | 0 | 0 | 0 | 0 | 0 | 0 | 0 | NUL | 26 |
| 1 | A | X | 1 | 0 | 1 | 0 | 0 | 1 | 0 | R | 27 |
| 1 | B | X | 1 | 0 | 0 | 0 | 0 | 0 | 1 | A | 28 |
| 1 | C | X | 1 | 0 | 1 | 0 | 1 | 0 | 0 | T | 29 |
| 1 | D | X | 1 | 0 | 0 | 0 | 1 | 0 | 1 | E | 30 |
| 1 | E | X | 0 | 1 | 1 | 0 | 0 | 0 | 0 | 0 | 31 |
| 1 | F | X | 0 | 1 | 1 | 0 | 1 | 0 | 1 | 5 | 32 |
| 2 | 0 | X | 1 | 0 | 0 | 0 | 1 | 0 | 1 | E | 33 |
| 2 | 1 | X | 1 | 0 | 1 | 0 | 0 | 0 | 1 | Q | 34 |
| 2 | 2 | X | 1 | 0 | 1 | 0 | 1 | 0 | 1 | U | 35 |
| 2 | 3 | X | 1 | 0 | 0 | 1 | 0 | 0 | 1 | I | 36 |
| 2 | 4 | X | 1 | 0 | 1 | 0 | 0 | 0 | 0 | P | 37 |
| 2 | 5 | X | 1 | 0 | 0 | 1 | 0 | 0 | 1 | I | 38 |
| 2 | 6 | X | 1 | 0 | 0 | 0 | 1 | 0 | 0 | D | 39 |
| 2 | 7 | X | 1 | 1 | 0 | 0 | 0 | 0 | 0 | 0 | 40 |
| 2 | 8 | X | 1 | 1 | 0 | 0 | 1 | 1 | 0 | 6 | 41 |
| 2 | 9 | X | 0 | 0 | 0 | 0 | 0 | 0 | 0 | NUL | 42 |
| 2 | A | X | 1 | 0 | 1 | 0 | 0 | 1 | 0 | S | 43 |
| 2 | B | X | 1 | 0 | 0 | 0 | 1 | 0 | 0 | D | 44 |
| 2 | C | X | 1 | 0 | 0 | 1 | 0 | 0 | 1 | I | 45 |
| 2 | D | X | 0 | 0 | 0 | 0 | 0 | 0 | 0 | NUL | 46 |
| 2 | E | X | 0 | 1 | 1 | 0 | 0 | 0 | 0 | 0 | 47 |
| 2 | F | X | 0 | 1 | 1 | 0 | 0 | 0 | 1 | 1 | 48 |

0153897

**FIG.8A**

```
                        ( IDLE )  ～200

        ┌─────────────────────────────────────┐
        │ DEPRESS MEM KEY                      │～202
        ├─────────────────────────────────────┤
        │ CPU READ "MEM" INTERRUPT; LOAD PROM  │
        │ RESIDENT PROMT MASK TO KEYBOARD      │～204
        │ DISPLAY INTERFACE                    │
        ├─────────────────────────────────────┤
        │ DISPLAY   M E M O R Y   S O U R C E  │
        │       208─   1      D A U            │～206
        │              2      D M U            │
        └─────────────────────────────────────┘
```

```
                         ～210
   "CLR"   ╱‾‾‾"CLR" "1", OR "2"‾‾‾╲   "1"
   ◄───────    KEY DEPRESSED        ────────►
           ╲_____╱
                     │ "2"

        ┌─────────────────────────────────────┐
        │ CDU TRANSMITS ARINC 429 WORD:        │～212
        │   "SID-DMU, DATA-MEM MOD, DAR FRAME FORMAT" │
        ├─────────────────────────────────────┤
        │ CUD RECEIVES 16 ARINC 429 WORDS DEFINING │～228
        │ CDU DISPLAY MASK                     │
        ├─────────────────────────────────────┤
        │ CDU UPDATES DISPLAY WITH NEW MASK 1: │
        │         D M U   M E M O R Y ～232    │～230
        │         1   D I S P L A Y            │
        │         2   M O D I F Y              │
        └─────────────────────────────────────┘
```

```
                         ～234
   "1"    ╱‾‾‾"1", "2", OR "CLR"‾‾‾╲   "2"
   ┌──────    KEY  DEPRESSED        ──────┐
   │       ╲_____╱     │
   │                │ "CLR"               │
  236╲             ▼                    ╱238
┌──────────────────────┐    ┌──────────────────────┐
│ CDU TRANSMITS ARINC  │    │ CDU TRANSMITS ARINC  │
│ 429 WORD:            │    │ 429 WORD:            │
│ "SDI-DMU;            │    │ "SDI-DMU; DATA-MODIFY │
│   DATA-DISPLAY FRAME │    │  FRAME FORMAT        │
│   FORMAT"            │    │                      │
└──────────────────────┘    └──────────────────────┘
```

```
                         ╱278
        ┌─────────────────────────────────────┐
        │ CDU RECEIVES, STORES, AND DISPLAYS   │
        │ MASK 6                               │
        │       I N I T I A L I Z E ～280      │
        │     F R A M E   F O R M A T          │
        │     1 _ Y E S   2 _ N O              │
        └─────────────────────────────────────┘
```

```
                         ～282
   ╱‾‾‾"1"."2", OR  "CLR"‾‾‾╲
┌──    KEY DEPRESSED        ──┐
│  ╲_____╱  │
284╲                        ╱286
┌──────────────────────┐  ┌──────────────────────┐
│ CDU TRANSMITS ARINC  │  │ CDU TRANSMITS ARINC  │
│ 429 WORD:            │  │ 429 WORD             │
│ SDI-DMU; DATA-INITIALIZE │ SDI-DMU; DATA-DO NOT │
│                      │  │ INITIALIZE           │
└──────────────────────┘  └──────────────────────┘
```

```
                         ╱304
        ┌─────────────────────────────────────┐
        │ CDU RECEIVES, STORES, AND DISPLAYS MASK 7 │
        │       E N T R Y   X X   E Q I D  _ _ │～306
        │       S Y S   _ _   L A B E L  _ _ _ │
        │       L S B  _ _ _    R A T A . _ _  │～353
        └─────────────────────────────────────┘
```

( A )                              ( B )

**FIG. 8B**

(A)   (B)

**308** CLR, IN, DATA KEY
- CLR
- IN
- DATA

**310** ENTERED DATA

**316** CDU SEARCHES RAM DISPLAY TABLE AND REPLACES FIRST UNDERBAR WITH DATA CHARACTER, IF NO UNDERBAR, DO NOTHING

**318** CDU UPDATES MASK DISPLAY

**312** REPLACE ALL ENTERED CHARACTERS IN RAM DISPLAY TABLE WITH UNDERBARS

**314** DISPLAY CLEARED MASK

**320** CDU TRANSMITS ARINC 429 MESSAGE:
    SDI-DMU
    DATA - 3 LINE DATA MASK

**346** CDU RECEIVES DMU MASK RESPONSE

**348** CDU DISPLAYS DMU MASK RESPONSE

**350**
```
E N T R Y   X X   E Q I D       _ _
S Y S   _ _     L A B E L       _ _ _
L S B   _ _ _         R A T E   _ _
```

**352**
```
D A T A   E N T E R E D
I N C O R R E C T L Y
P R E S S   C L R
```

**351**
```
O U T P U T   R A T E
N O T   A V A I L A B L E
P R E S S   C L R
```

**354** CLR — NO / YES   **362** CLR — YES / NO

**356** CDU TRANSMITS MESSAGE
    SDI-DMU
    DATA-REQUEST PREVIOUS MASK

CDU RECEIVES DMU PREVIOUS MASK, STORES AND DISPLAYS:

**358**
```
E N T R Y   X X   E Q I D       _ _
S Y S   _ _     L A B E L       _ _ _
L S B   _ _ _         R A T E   _ _
```

# FIG. 9A

ENTER ⟶ 214

CDU MESSAGE — 216 → NO → DO OTHER AIDS FUNCTIONS — 218

YES

"MEM" REQUEST MODE — 220 → NO → OTHER REQUEST CODE — 222 → NO

YES (220) / YES (222) → TRANSMIT 16 WORD MESSAGE WITH APPROPRIATE MASK — 224

TRANSMIT MASK 1 TO CDU (SHOWN FIG. 8B) — 226

CLR DEPRESSED — 252 → NO

YES

TRANSMIT MASK 2: — 250

DATA ENTERED INCORRECTLY PRESS CLR

CDU REPLY — 240 → NO

YES

NO. 1 "DISPLAY" SELECTED — 242 → YES → TRANSMIT MASK 3: — 244

DMU MEM DISPLAY ENTER OCTAL ADDRESS _ _ _ _ _ _ _

NO

NO. 2 MODIFY SELECTED — 246 → NO → CLR DEPRESSED — 248 → YES

NO

YES

A

B

9/12

0153897

0153897

FIG.9B

FIG.9C

11/12

0153897

0153897

*FIG.9D*

(F)

(G)

ASSIGN WORD SLOTS
IN DAR FRAME FORMAT ─*340*

TRANSMIT COMPLETE
MASK AND WORD SLOT ─*342*
NUMBER TO PRINTER

INCREMENT MASK 7 ─*344*
"ENTRY" BY 1